# DEMANDE DE BREVET EUROPEEN

(11) **EP 0 973 228 A1**
(43) Date de publication de la demande: **19.01.2000**
(21) Numéro de dépôt: 99202179.0
(22) Date de dépôt: 06.07.1999
(51) Int. Cl.: H01Q 1/24, H04B 1/38

(54) **Appareil radioélectrique comportant une antenne en forme de tige**

(30) Priorité: 16.07.1998 FR 9809106
(71) Demandeur: Koninklijke Philips Electronics N.V., 5621 BA Eindhoven (NL)
(72) Inventeur: Patachi, Nicolae-Valeriu, 75008 Paris (FR)
(74) Mandataire: Chaffraix, Jean

(57) **Abrégé**

Pour éviter que l'embout (15) de l'antenne (11) se casse au niveau de la protubérance de saisie (17) lors de la chute de l'appareil, on a prévu un raccord progressif (45) entre la protubérance (17) et l'embout (15).

De plus, le système de blocage (35-37) de l'antenne a été éloigné de cette protubérance.
- Application :: Tout appareil comportant une antenne télescopique.

## Description

La présente invention concerne un appareil de radiotéléphonie mobile comportant une antenne formée d'une tige terminée par un embout sur lequel est disposée une protubérance.

L'invention concerne aussi une telle antenne.

De tels appareils sont bien connus et trouvent de nombreuses applications, notamment dans le domaine des appareils de téléphonie portables.

Un élément essentiel de ces appareil est l'antenne qui bien souvent prend deux positions une position repliée et une position déployée. Lorsqu'elle est en position repliée, on la saisit par la protubérance pour la déployer.

Par exemple, on pourra consulter, à ce sujet le document de brevet US N° 5 710 567.

Avec ce genre d'appareil, on est confronté au problème des chutes. Si l'antenne est en positon repliée, elle est relativement protégée, mais si par contre, elle est dans la position déployée, elle est particulièrement vulnérable. Il se produit, alors, une cassure au niveau de la protubérance ce qui fait que l'on a beaucoup de difficultés à déployer l'antenne après cette cassure.

La présente invention propose un appareil du genre mentionné dans le préambule dans lequel l'embout d'antenne présente une bonne robustesse aux chutes.

Pour cela, un tel appareil est remarquable en ce que la dimension dudit raccord est pratiquement égale au dépassement de la protubérance par rapport à l'embout.

La position repliée doit souvent être bloquée si l'on ne veut pas que l'antenne se déploie spontanément, et l'on prévoit un système de blocage qui nécessite un étranglement de l'embout, diminuant le diamètre de cet embout.

Selon une caractéristique de l'invention, le système de blocage est disposé à une certaine distance de la protubérance.

L'idée de l'invention est d'éviter qu'il y ait des points de cassures au niveau de la protubérance et donc d'éloigner de celle-ci toute diminution géométrique de l'embout.

La description suivante, faite en regard des dessins ci-annexés, le tout donné à titre d'exemple non limitatif, fera bien comprendre comment l'invention peut être réalisée.
La figure 1 montre un appareil conforme à l'invention.
La figure 2A montre le schéma de l'antenne en position repliée.
La figure 2B montre le schéma de l'antenne en position déployée.
La figure 3 est le schéma de l'antenne faisant apparaître ses cotes caractéristiques.

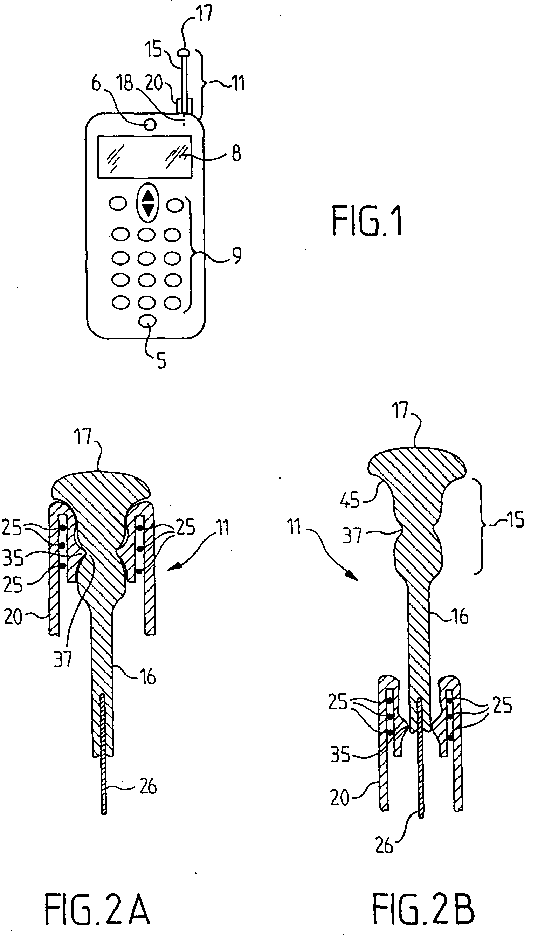

A la figure 1, on a représenté un appareil électronique conforme à l'invention. Dans le cadre de l'exemple décrit, c'est un appareil radio téléphonique portable du genre utilisé dans les systèmes cellulaires (GSM par exemple). Il est composé d'un microphone 5, d'un écouteur 6, d'un écran 8, d'un clavier 9 et d'une antenne 11, montrée en position déployée. Cette antenne 11 comporte une partie visible formée notamment d'un embout 15 qui est disposé à la suite d'une tige 16 (Fig.2A) et sur lequel est disposée une protubérance 17. Elle comporte aussi une partie invisible 18 montrée en pointillé qui n'est pas explicitée car ne faisant pas partie de l'invention. L'embout 15 vient se loger, lorsque l'antenne est en position repliée, dans un fourreau 20. Selon l'art, tel que donné par le document de brevet précité, ce fourreau contient une hélice métallique participant au rayonnement qui fait donc partie de l'antenne.

La figure 2A montre le schéma de cette antenne 11 en position repliée. Cette figure montre en coupe les sections 25 de ladite hélice contenue dans le fourreau 20, la référence 26 indique le brin rayonnant de l'antenne plongeant dans la tige 16.

Lorsque l'antenne est en position repliée elle est maintenue dans cette position par un système de blocage formé, d'une part, par une partie saillante 35 ménagée à l'intérieur du fourreau et, d'autre part, par une partie en creux 37 ménagée dans l'embout 15. Ces deux parties viennent s'encastrer pour assurer ledit blocage.

La figure 2B montre l'antenne dans la position déployée, les parties 35 et 37 ne sont plus en contact mécanique entre elles et l'antenne peut se déployer jusqu'à prendre sa position définitive. Pour cela, l'utilisateur saisit la protubérance 17.

Souvent lorsque ces appareils chutent et qu'ils tombent sur l'antenne, la protubérance se casse. De ce fait, l'utilisateur n'a plus de prise sur l'embout et a des difficultés pour déployer l'antenne. Pour éviter cette cassure, La partie de raccord 45, entre la protubérance 17 et l'embout 15, présente un rayon de courbure assez grand. Le système de blocage (35-37) est situé à une certaine distance de la protubérance.

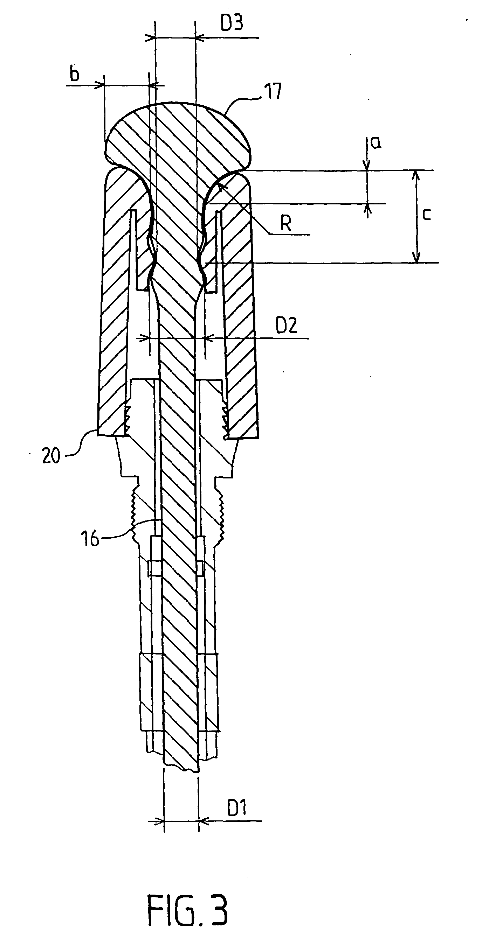

La figure 3 donne des indications sur les dimensions de l'antenne conforme à l'invention. Ainsi :
- 〈〈a〉〉 représente la grandeur du raccord entre la protubérance et l'embout,
- 〈〈b〉〉 représente le dépassement de la protubérance par rapport à l'embout,
- 〈〈c〉〉 représente la distance entre la protubérance et le système de blocage,
- 〈〈D1〉〉 est le diamètre de la tige,
- 〈〈D2〉〉 est le diamètre de l'embout,
- 〈〈D3〉〉 est le diamètre considéré au niveau du système de blocage,
- 〈〈R〉〉 est le rayon de courbure du raccord.

On choisit une valeur de 〈〈a〉〉 pratiquement égale à la valeur de 〈〈b〉〉, ainsi les forces qui tendent à couper la protubérance sont réparties de manière égale et s'annulent.

Le système de blocage est placé à une distance telle que la valeur de 〈〈c〉〉 soit en ordre de grandeur égale au double de 〈〈a〉〉.

En outre un diamètre 〈〈D3〉〉 un peu plus petit que le diamètre 〈〈D2〉〉 mais plus grand que le diamètre 〈〈D1〉〉 favorise aussi la résistance aux chocs.

## Revendications

1. Appareil de radiotéléphonie mobile comportant une antenne formée d'une tige terminée par un embout sur lequel est disposée une protubérance, caractérisé en ce que la dimension dudit raccord est pratiquement égale au dépassement de la protubérance par rapport à l'embout.

2. Appareil selon la revendication 1 dans lequel l'antenne peut être mise, au moins, en position repliée et en position déployée, comportant un système de blocage en position repliée caractérisé en ce que le système de blocage est placé à une certaine distance de la protubérance.

3. Appareil selon la revendication 1 ou 2 caractérisé en ce que le système de blocage est formé par une partie en creux au niveau de l'embout et par une partie saillante ménagée dans un fourreau solidaire de l'appareil.

4. Appareil selon l'une des revendications 1 à 3 caractérisé en ce que le diamètre de l'embout considéré au niveau du système de blocage est légèrement inférieur aux diamètres de l'embout et de la tige.

5. Antenne convenant à un appareil selon l'une des revendications 1 à 4 caractérisée en ce qu'elle est formée d'une tige terminée par un embout sur lequel est disposée une protubérance et en ce que le raccord entre ladite protubérance et l'embout présente un rayon de courbure important.

6. Antenne selon la revendication 5 pouvant être mise, au moins, en position repliée et en position déployée et comportant un système de blocage en position repliée caractérisée en ce que le système de blocage est placé à une certaine distance de la protubérance.

7. Antenne selon la revendication 5 ou 6 caractérisée en ce que le système de blocage est formé par une partie en creux au niveau de l'embout et par une partie saillante ménagée dans un fourreau solidaire de l'appareil.

8. Antenne convenant à un appareil selon l'une des revendications 5 à 7 caractérisée en ce que la dimension dudit raccord est pratiquement égale au dépassement de la protubérance par rapport à l'embout.

9. Antenne convenant à un appareil selon l'une des revendications 5 à 8 caractérisée en ce que le diamètre de l'embout considéré au niveau du système de blocage est légèrement inférieur aux diamètres de l'embout et de la tige.
